(19) Europäisches Patentamt
European Patent Office
Office européen des brevets

(11) **EP 2 230 111 B1**

(12) **EUROPEAN PATENT SPECIFICATION**

(45) Date of publication and mention
of the grant of the patent:
**11.07.2012 Bulletin 2012/28**

(51) Int Cl.:
***B60H 1/00*** *(2006.01)*   ***F25B 45/00*** *(2006.01)*

(21) Application number: **10157060.4**

(22) Date of filing: **19.03.2010**

(54) **Determining the quantity/weight of oil supplied from a charging station to a vehicle air conditioning system.**

Bestimmung der Menge/des Gewichts eines aus einer Kühlflüssigkeitsladestation in eine Fahrzeugklimaanlage gespeisten Öls

Détermination de la quantité/poids d'une huile provenant d'une station de chargement de liquide réfrigérant sur un système de climatisation de véhicule

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.03.2009 IT TV20090048**

(43) Date of publication of application:
**22.09.2010 Bulletin 2010/38**

(73) Proprietor: **Texa S.p.A.**
**Monastier di Treviso (IT)**

(72) Inventor: **Vianello, Bruno**
**31056 Roncade (IT)**

(74) Representative: **Jorio, Paolo et al**
**Studio Torta S.p.A.**
**Via Viotti, 9**
**10121 Torino (IT)**

(56) References cited:
**WO-A1-2008/025935      DE-A1-102007 006 876**
**US-A- 4 441 330         US-A- 5 433 081**
**US-A1- 2006 010 888**

## Description

The present invention relates to determining the quantity/weight of an oil supplied from a refrigerant fluid charging station to a vehicle air-conditioning system.

In particular, the present invention relates to a refrigerant fluid charging station in a vehicle air-conditioning system of the type comprising: an aspiration/supply circuit which may be connected to a cooling circuit of the air-conditioning system to aspirate a residual quantity of refrigerant fluid therefrom or alternatively to supply a quantity of refrigerant fluid in the cooling circuit itself; and a recovery assembly, which is connected to the aspiration/supply circuit and is structured to separate possible water molecules and residual oils circulating in the cooling circuit from the refrigerant fluid recovered, so as to store the same within a corresponding recovery container.

The above-described aspiration/supply circuit of the refrigerant fluid further comprises a charging reservoir containing oil intended to be supplied to the air-conditioning system of the vehicle when charging the same to perform a lubricating action and/or a function of visually signaling leakages/breakages in the cooling circuit.

Furthermore, the charging station is typically provided with a measurement system, which is adapted to measure the quantity/weight of oil ejected from the charging reservoir and supplied to the cooling circuit so as to allow to check charging correctness of the air-conditioning system.

It is further known that the currently known measurement systems are essentially based on three different measurement types.

A first measurement type is based on the use of electronic scales, which are typically provided with a measuring surface, on which the charging reservoir is arranged, and which are adapted to measure the weight variations which appear in the charging reservoir between the initial moment and the final moment of oil supply. The weight variation is thus provided to a computing unit which computes the total weight/quantity of oil ejected from the reservoir and supplied to the system according to the variation itself.

The measurement systems using the aforesaid electronic scales have the following technical problems.

Firstly, a consequent "miscalibration" of the scale occurs whenever the electronic scale is incorrectly assembled on the charging system and/or the reservoir is incorrectly placed on the measuring surface, which causes the introduction of errors in the measurements carried out.

Secondly, the operation of the electronic scales, and therefore the correctness of the measurement provided by the same, is disadvantageously influenced by the presence of external electromagnetic fields.

A second type of measurement systems is based instead on a user's direct reading of a graduated scale indicating the instantaneous weight/quantity of oil present in the charging reservoir.

In particular, the quantity of oil ejected from the reservoir is measured by the user according on the graduated scale reading carried out at the initial and final oil supplying moments.

It is apparent that such a measurement, in addition to being inconvenient and not very practical for users, is inherently subject to reading inaccuracies and to calculation inaccuracies by the users themselves.

Finally, a third type of measurement systems is based on directly estimating the flow of oil while charging.

The estimation of the flow of oil may be however disadvantageously influenced by the variations of physical magnitudes which characterize the oil, such as for example viscosity, temperature, external pressure, quantity of fluid in the reservoir and/or the presence of obstructions in the aspiration/supply circuit on which the measurement is carried out.

US-4441330 describes an apparatus and method for charging a cooling circuit, in which the refrigerant is removed, reprocessed and reintroduced into the cooling circuit.

US44413301A discloses a method and apparatus for servicing refrigeration circuits wherein the refrigerant is removed from the circuit and the circuit recharged. In accord with the invention the recovered refrigerant may be reprocessed for recharging the circuit, or the recovered refrigerant may be stored and fresh refrigerant employed for circuit charging purposes. Further, the invention contemplates the removal of oil from recovered refrigerant, and the charging of a predetermined amount of lubricating oil into the recharged circuit.

US-5433081 describes an apparatus for removing refrigerant from a refrigerating unit, in which means for filtering the refrigerant, means for converting the liquid refrigerant into a gaseous refrigerant and means for purifying the gaseous refrigerant by means of refining means are provided.

It is thus the object of the present invention to provide a refrigerant fluid charging station in a vehicle air-conditioning system which is capable of very accurately determining the weight/quantity of oil injected into the vehicle system while overcoming the above-described drawbacks.

According to the present invention, a refrigerant fluid charging station in a vehicle air-conditioning system is provided as set forth in claim 1 and preferably, but not necessarily, in any one of the claims, either directly or indirectly depending from claim 1.

According to the present invention, a method for determining the quantity/weight of oil supplied from a charging station of a vehicle air-conditioning system is provided, as set forth in claim 10 and preferably, but not necessarily, in any one of the claims either directly or indirectly depending from claim 10.

The present invention will now be described with reference to the accompanying drawings, which illustrate a non-limitative embodiment thereof, in which:

- figure 1 diagrammatically shows a charging station of a refrigerating fluid in a vehicle air-conditioning system made according to the dictates of the present invention;
- figures 2 and 3 diagrammatically show an electronic measurement system comprised in a refrigerant fluid charging station shown in figure 1, at two operation moments corresponding to the beginning and to the end of oil charging in the air-conditioning system, respectively; whereas
- figure 4 shows the electronic measurement system according to a possible constructional variant.

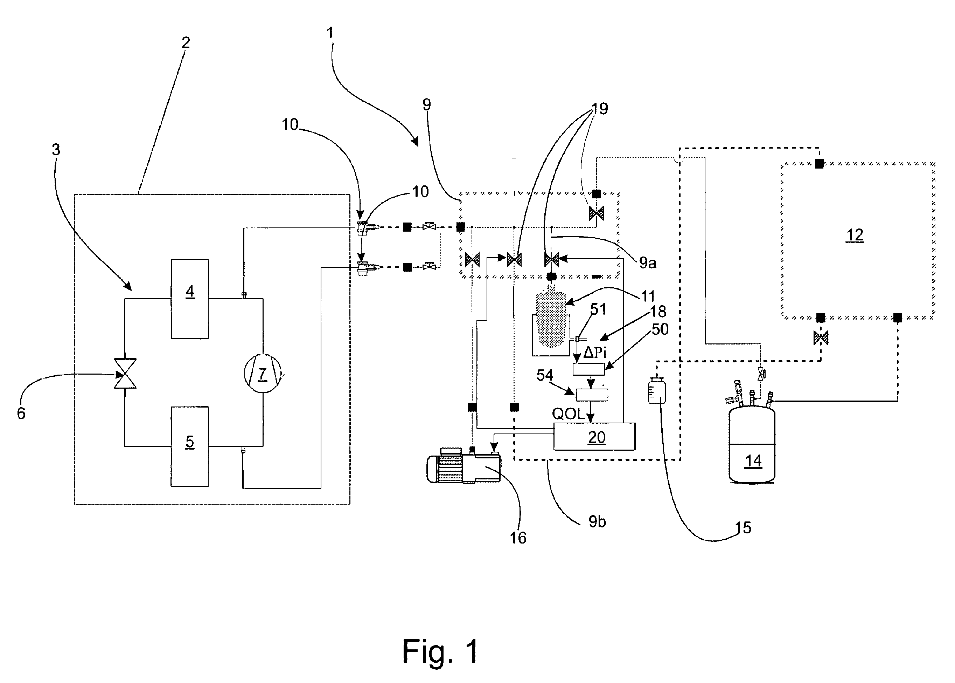

With reference to figure 1, numeral 1 indicates as a whole a charging station of an air-conditioning system 2 for vehicles, such as for example cars, trucks, coaches or any other similar land motor vehicle.

The air-conditioning system 2 essentially comprises a cooling circuit 3, along which there are arranged a condenser 4, an evaporator 5, an expansion valve 6 and a compressor 7, which in use is adapted to circulate a refrigerant mixture in the cooling circuit 3, the refrigerant mixture consisting of refrigerant fluid and a predetermined amount of oil, in particular lubricant oil, serving the function of lubricating the mechanical members (not shown) operating in the compressor 7 itself.

The vehicle air-conditioning system 2 is not the object of this invention and is of known type, therefore it will not be further described.

The charging station 1 is configured to carry out operations of aspirating/supplying the refrigerant mixture from/into the vehicle air-conditioning system 2 itself.

In particular, the charging station 1 is preferably, but not necessarily adapted to aspirate a residual quantity of refrigerant mixture from the air-conditioning system 2 so as to empty it completely, and once it has been completely emptied, it supplies oil (preferably, but not necessarily lubricant oil) and a nominal amount of refrigerating fluid into the air-conditioning system 2 itself.

In the example shown in figure 1, the charging station 1 comprises an aspiration/supply circuit 9 having a pair of connectors 10 connectable to corresponding connectors of the cooling circuit 3, and at least one oil charging reservoir 11, adapted to be connected in a firm but easily removable manner to the aspiration/supply circuit 9 by means of a duct 9a.

Moreover, the charging station 1 preferably, but not necessarily comprises a refrigerant mixture recovery assembly 12, which is connected to the aspiration/supply circuit 9 by means of a duct 9b, and has the function of filtering the refrigerant mixture so as to separate the refrigerant fluid from the lubricant oil and store the same in a refrigerant container 14 and in an oil recovery container 15, respectively.

The charging station 1 further comprises at least one pump 16, connected to the aspiration/supply circuit 9 to adjust the aspiration or thrust pressure of the fluids circulating within the same during the operations of charging the refrigerant fluid and/or oil; a series of shut-off devices for the fluid 19 corresponding, for example, to the valves arranged along the aspiration/supply circuit 9 to open/close conduction segments thereof according to respective electric control signals generated by an electronic control unit 20.

Furthermore, the charging station 1 comprises an electronic measurement system 18, which is configured so as to determine the volume variation $\Delta V$ of the air inside the charging reservoir 11, during the oil supplying time interval $\Delta T$ in the cooling circuit 3, and computes the weight/quantity QOL of oil ejected from the charging reservoir 11 and supplied to the cooling circuit 3 according to the air volume variation $\Delta V$ itself.

In particular, in the example shown in figures 1, 2 and 3, the oil charging reservoir 11 is shaped so as to be coupled in a firm but easily removable manner to the duct 9a of the aspiration/supply circuit 9, and has a orifice 40 connected to an outer duct 41 with a small section which puts the space inside the charging reservoir 11 into communication with the space outside the same.

The electronic measurement system 18 comprises a computing unit 50 configured to determine the air volume variation $\Delta V$ in the reservoir 11 during the oil supplying time interval, according to the volumetric flow of air Q measured in $m^3/s$, which corresponds to the air volume in (cubic meters) passing through the duct 41 in the time unit (seconds).

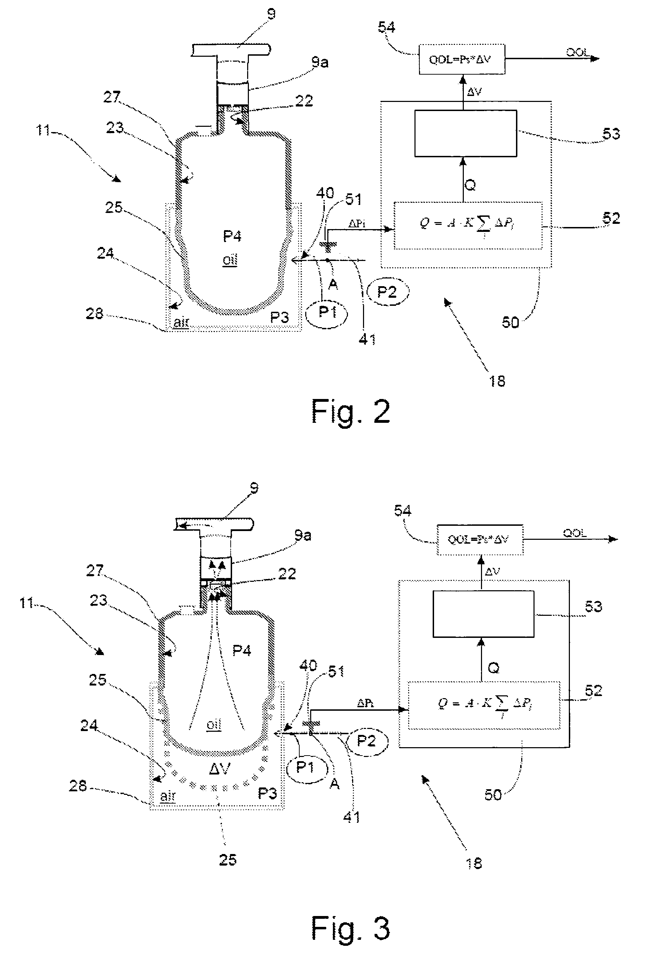

In particular, in the example shown in figures 2 and 3, the electronic measurement system 18 comprises a measurement device 51 adapted to measure the difference $\Delta P$ between the air pressure P1 in an intermediate portion of duct 41, and the air pressure P2 outside the charging reservoir 11.

In this case, the measurement device 51 comprises at least one pressure transducer, preferably but not necessarily a relative pressure transducer capable of outputting a signal containing the difference $\Delta P$ between the air pressure P1 in an intermediate portion of duct 41, the section A of which may be comprised, for example, between 0.1 and 2 mm, and the air pressure P2 outside the charging reservoir 11 itself.

The computing unit 50 comprises, instead, a computing module 52 which receives the input pressure difference $\Delta P$ measured by the measuring device 51 and, according thereto, computes the volumetric flow of air Q, which corresponds to the air volume which crosses the section A of the intermediate portion of duct 41 in the unit of time (seconds).

In particular, the computing module 52 is configured so as to compute the air flow Q by means of the equation:

$$Q = A \cdot K \sum_i \Delta P_i$$

where A represents the section of the intermediate duct segment; ΔPi represent the pressure differences measured at subsequent time points and K is a predetermined constant.

The computing unit 50 further comprises a computing module 53, which receives the volumetric input air flow Q and outputs the air volume variation ΔV in the time interval ΔT.

In particular, the computing module 53 is adapted to compute the air volume variation ΔV in the time interval ΔT preferably, but not necessarily, by means of the following ratio:

$$\Delta V = \int_{t=0}^{t=\Delta T} Q dt \; .$$

The electronic measurement system 18 further comprises a computing module 54, which receives the input air volume variation ΔV and calculates the quantity/weight of oil QOL by means of the following ratio:

$$QOL = ps * \Delta V$$

where ps is the specific weight of oil.

In the example shown in the appended figures, the reservoir 11 has a mouth or opening 22 structured to be coupled in a firm but easily removable manner to the duct 9a of the aspiration/supply circuit 9, and is provided with two inner, variable-volume chambers 23 and 24, complementary to each other, and divided by a mobile separating element 25 within the reservoir 11.

In particular, a first variable-volume chamber 23 is adapted to contain the oil and communicates with the oil ejection opening 22, while a second variable-volume chamber 24 is adapted to contain air and communicates with the outside environment by means of the orifice 40 and the corresponding duct 41.

In the example shown in the appended figures, the mobile separating element 25 is arranged inside the recharging reservoir 11 to separate the first 23 and the second 24 chambers and is defined by a bag, which is structured to be deformed within the charging reservoir 11, under the bias of the pressure P3 present in the second chamber 24, so that the volume variation ΔV obtained in the second chamber 24 contextually causes the same volume variation of opposite sign in the first chamber 23.

In this case, the charging reservoir 11 comprises a first cup-shaped body 27 internally delimiting the first oil containing chamber 23 and having a connection mouth 22 on the top thereof, communicating with the first chamber 23 itself.

The charging reservoir 11 further comprises a second cup-shaped body 28, which is coupled in a firm and, preferably but not necessarily, removable manner to the first cup-shaped body 27 so as to form a closed shell, and delimits the second inner air-containing chamber 24 therein, communicating with the outside through the orifice 40 obtained, in turn, on the second cup-shaped body 28.

The bag may be firmly connected to the inner walls of the first 27 and/or second 28 cup-shaped bodies so as to divide the first chamber 23 from the second chamber 24.

The bag is made of easily deformable material, such as for example plastic material or rubber material or any similar deformable material, and in the example shown in figures 2 and 3, is firmly connected to the first cup-shaped body 27 so as to define the first oil containing chamber 23 therein and is adapted to be deformed under the bias of a pressure difference ΔP=P3-P4 between the air pressure P3 inside the second chamber 24 and the oil pressure P4<P3 inside the first chamber 23, so as to collapse towards the first cup-shaped body 27 and be arranged at least partially within the first inner chamber 23.

The first 27 and second 28 cup-shaped bodies may be made of a substantially rigid material, such as for example plastic material or glass material or metal material or any other similar rigid material, while the connection mouth 22 of the first cup-shaped body 27 may be adapted to preferably but not necessarily accommodate a one-way valve (not shown) adapted to operate between an airtight closing condition of the inner, variable-volume chamber 23, and an opening condition in which it allows the lubricating oil to be released from the reservoir 11 through the mouth 22.

In this case, the one-way valve corresponds to a check valve comprising a central duct which puts the first chamber 23 into communication with the outside environment, a disc mounted so as to be moved inside a seat obtained in the central duct, and a spring capable of pressing the disc against a seat base so as to air-tightly shut the duct.

In the example shown in figures 2 and 3, the peripheral edge of the bag is air-tightly sealed onto the peripheral edge of the first cup-shaped body 27 so as to internally delimit the first inner chamber 23 therewith.

More in detail, the bag is adapted to be deformed between a maximum expansion condition, in which the containing volumes Vi1 and Vi2 of the first 23 and second 24 chambers correspond to a maximum containing volume Vi1=VM and to a minimum containing volume Vi2=Vm=0 of the charging reservoir 11, respectively, and a complete emptying condition of reservoir 11, in which the containing volumes Vi1 and Vi2 of the first 23 and second 24 chambers correspond to a minimum containing volume Vi1=Vm=0 and to a maximum containing volume Vi2=VM, respectively.

In this case, in complete emptying condition, the bag is completely deformed within the first chamber 23 so as to rest, i.e. to arrange the inner surface thereof completely against the inner face of the first cup-shaped body 27 for reducing the inner containing volume Vi1 of the first chamber 23 to a substantially zero value.

During the lubricant oil supplying operation, the charging station 1 creates a vacuum P4<P3 by means of pump 16 within the cooling circuit 3, and puts the first inner variable-volume chamber 23 of the reservoir 11 into communication with the aspiration/supply circuit 9, the latter operation being obtainable by the opening of the fluid shut-off device 19 arranged along the duct 9a, for example.

During this step, as pressure P3 in the second inner chamber 24 is higher than the inner pressure P4 of the first chamber 23, it generates a thrust on the bag, which deforms the same towards the first cup-shaped body 27, while originating an ejection of oil from the reservoir 11.

Furthermore, during this step, the deformation of the bag originates an air volume variation ΔV within the second chamber 24, which is gradually measured by the measurement system 50. In particular, during the bag deformation, the measurement system 18 measures the air pressure variation ΔPi within the duct 41 with respect to the outside in order to compute the volumetric flow of air Q at predetermined intervals of time.

Once the volumetric flow of air Q has been determined, the measurement system 18 determines the oil quantity/weight QOL ejected by the reservoir 11 as described above.

The value of the oil quantity/weight QOL thus determined may be received by the electronic control unit 20, which conveniently controls the supply of oil into the air-conditioning system 2 according to the quantity/weight itself.

The above-described system is highly useful because in addition to being simple and cost-effective to be implemented, it is highly accurate because not influenced by the physical parameters which characterize the oil, it does not have problems of miscalibration and is capable of providing an oil quantity/weight measurement which is completely immune from electromagnetic fields.

It is finally apparent that changes and variations may be made to the charging station and to the electronic measurement system described and illustrated above, without departing from the scope of the present invention.

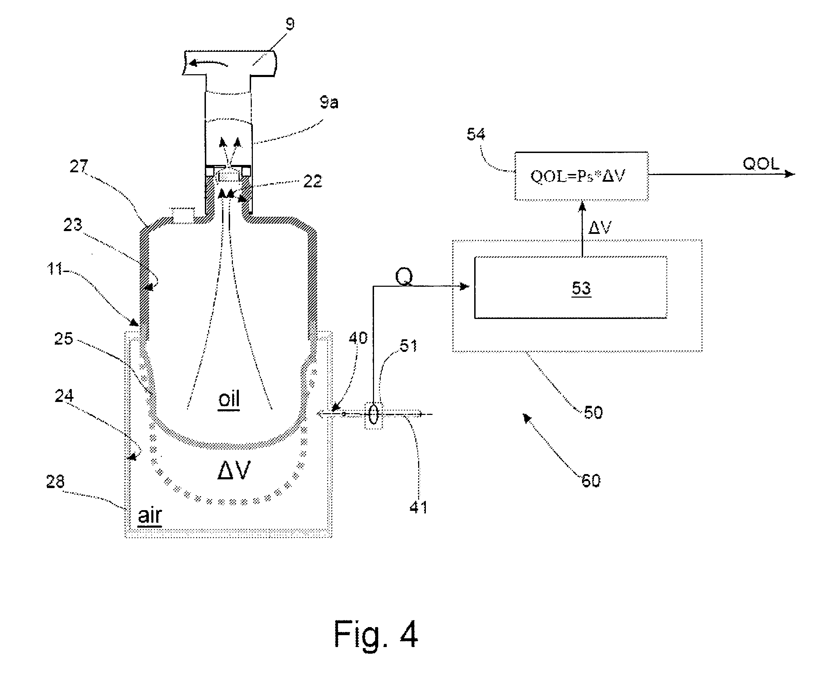

In particular, the embodiment shown in figure 4 relates to an electronic measurement system 60 of the quantity of oil supplied by a charging station 1 to an air-conditioning system of a motor vehicle, which is similar to the electronic measurement system 18, and the component parts of which will be identified, where possible, using the same reference numbers which denote corresponding parts of the system 18 itself.

The measurement system 60 differs from the measurement system 18 in that the measuring device 51 corresponds to a flow-meter, which is arranged on the duct 41 to directly provide a value corresponding to the volumetric flow of air Q measured in the duct 41 itself, while the computing unit 50 is free from the computing module 52 and only comprises the computing module 53.

Indeed, in this case, the flow-meter directly provides the measured volumetric flow of air Q to the computing module 53, which determines the volume variation ΔV and provides the latter to the computing module 54 which determines, in turn, the oil quantity/weight QOL in a completely similar manner.

## Claims

1. An air conditioner charging station (1) configured so as to charge a refrigerant fluid and of an oil in a vehicle air-conditioning system (2);
   said station (1) comprising:

   - at least one oil containing reservoir (11) which is shaped so as to have an orifice (40) connected to a duct (41) with a reduced section configured to connect the inner space of said reservoir (11) with the space outside the reservoir (11) ;
   - a charging circuit (9) configured so as to supply a quantity of oil contained in said reservoir (11) to said air-conditioning system (2) following a command;

   said station (1) being **characterised by** comprising an electronic measurement system (18)(60) comprising:

   - first computing means (53) determining the variation of the air volume (ΔV) in said reservoir (11) as a function of the volumetric flow of air (Q) flowing through said duct (41), during an oil supplying time interval (ΔT) in said air-conditioning system (2); and

   second computing means (54) configured so as to compute the quantity/weight of oil (QOL) ejected from said reservoir (11) and supplied to said air-conditioning system (2) as a function of said variation of air volume (ΔV).

2. The charging station according to claim 1, comprising measurement means (51) which measure the volumetric flow of air (Q) flowing through the section (A) of a intermediate portion of said duct (41) and provide the volumetric flow of air (Q) to said first computing means (53).

3. The charging station according to claim 1, comprising measurement means (51) which measure the difference of pressure (ΔP) between the pressure (P1) of the air in an intermediate portion of said duct (41), and the pressure (P2) of the air outside said reservoir (11); and third computing means (52) which determine the volumetric flow of air (Q) flowing through said intermediate portion of said duct (41) as a function of said difference (ΔP) of measured pressure.

4. The charging station according to claim 3, wherein said third computing means (52) compute the volumetric flow of air (Q) by the following equation:

$$\dot{Q} = A \cdot K \sum_{i} \Delta P_i$$

wherein A represents a cross-section of said intermediate segment of said duct (41); ΔPi represent the differences of pressure measured at predetermined subsequent time points, while K is a constant.

5. The charging station according to any of the preceding claims, wherein said reservoir (11) is provided with two inner chambers (23) (24) which have a variable volume, are complementary to one another and are divided by a mobile separating element (25); a first variable volume chamber (23) being adapted to contain said oil and being provided with an ejection opening (22) of said oil connectable to said charging circuit (9); a second variable volume chamber (24) being adapted to contain air and communicating with the outer environment through said orifice (40) and said duct (41).

6. The charging system according to claim 5, wherein said mobile separating element (25) of said first and second variable volume chambers (23, 24) comprises a bag, which is configured to deform within the reservoir (11), under the action of the pressure (P3) in the second chamber (24), so that the variation of volume (ΔV) obtained in the second chamber (24) determines at the same time a same variation of volume having opposite sign in the first chamber (23).

7. The charging station according to claim 6, wherein said reservoir (11) comprises: a first rigid cup-shaped body (27) internally delimiting said first oil containing chamber (23), and a second rigid cup-shaped body (28), which is coupled to said first rigid cup-shaped body (27) so as to form a closed shell and delimits therein said second air containing chamber (24); said deformable bag being stably connected to the inner walls of said first (27) and/or said second (28) cup-shaped body so as to subdivide said first chamber (23) from said second chamber (24); said orifice (40) being obtained on said second rigid body (28).

8. The charging station according to any of claims 3 to 7, wherein said measurement means (51) comprise at least one pressure transducer arranged on said duct (41) for measuring the pressure (P1) of the air within said intermediate portion of the duct (41).

9. The charging station according to any of the preceding claims, wherein said second computing means (54) are configured to compute the quantity/weight of oil ejected from said reservoir (11) by the following equation:

$$QOL = ps \star \Delta V$$

wherein ps is the specific weight of said oil; ΔV is the variation of the air volume in the reservoir.

10. A method for determining the quantity/weight of an oil supplied from a air conditioner charging station (1) of a vehicle air-conditioning system (2); said refrigerant charging station (1) comprising:

    at least one oil containing reservoir (11) which is shaped so as to have an orifice (40) connected to a duct (41) with a reduced section configured to connect the inner space of said reservoir (11) with the space outside the reservoir (11); a charging circuit (9) configured so as to supply in said air-conditioning system (2) oil contained in said reservoir (11) following a command;

    said method being **characterised by** comprising the steps of:

    - determining the variation of air volume (ΔV) within said reservoir (11) as a function of the volumetric flow of air (Q) flowing through said duct (41), during an oil supplying time interval (ΔT) in said air-conditioning system (2); and
    - computing the quantity/weight of oil (QOL) ejected from said reservoir (11) and supplied in said air-conditioning system (2) as a function of said variation of air volume (ΔV).

11. The method according to claim 10, comprising the step of computing the volumetric flow of air (Q) flowing through a section (A) of said intermediate portion of said duct (41) by the following equation:

$$Q = A \cdot K \sum_{i} \Delta P_i$$

wherein A represents the section of said intermediate segment of said duct; ΔPi represent the differences of pressure measured at subsequent time points and K is a constant.

12. The method according to claim 10, comprising the step of measuring the volumetric flow of air (Q) flowing through said duct (41).

13. The method according to any claim 10 to 12, comprising the step of computing the quantity/weight of oil ejected from said reservoir (11) by the following equation:

$$QOL = ps * \Delta V$$

wherein ps is the specific weight of said oil; ΔV is the variation of the air volume.


**Patentansprüche**

1. Klimaanlagenladestation (1), die konfiguriert ist, ein Kältemittel und von einem bzw. ein Öl in ein Fahrzeugklimaanlagensystem (2) zu laden; wobei die Station (1) umfasst:

  - zumindest ein Öl enthaltendes Reservoir bzw. Behälter (11), das bzw. der so geformt ist, dass es bzw. er eine Öffnung (40) aufweist, die mit einem Kanal bzw. einer Leitung (41) verbunden ist, der bzw. die eine verringerte Sektion aufweist, die konfiguriert ist, den Innenraum des Reservoirs bzw. Behälters (11) mit dem Raum außerhalb des Reservoirs bzw. Behälters (11) zu verbinden;
  - einen Ladekreis (9), der konfiguriert ist, eine Menge von Öl, die in dem Reservoir bzw. Behälter (11) enthalten des Klimaanlagensystem (2) einem Befehl folgend zuzuführen;

  wobei die Station (1) **dadurch gekennzeichnet ist, dass** sie ein elektronisches Messsystem (18) (60) umfasst, das umfasst:

  - erste Rechenmittel (53), welche die Variation des Luftvolumens (ΔV) in dem Reservoir bzw. Behälter (11) als eine Funktion bzw. in Abhängigkeit von dem Volumenstrom von Luft (Q), der durch die Leitung bzw. den Kanal (41) strömt, während eines Ölzufuhrzeitintervalls (ΔT) in dem Klimaanlagensystem (2) bestimmen; und
  - zweite Rechenmittel (54), die konfiguriert sind, die Menge/das Gewicht von Öl (QOL), das aus dem Reservoir bzw. Behälter (11) ausgestoßen und dem Klimaanlagensystem (2) zugeführt wird, als eine Funktion bzw. in Abhängigkeit von der Variation des Luftvolumens (ΔV) zu berechnen.

2. Ladestation nach Anspruch 1, umfassend Messmittel (51), die den Volumenstrom von Luft (Q), der durch die Sektion (A) eines Zwischenabschnitts der Leitung (41) strömt, messen und den Volumenstrom von Luft (Q) dem ersten Rechenmittel (53) bereitstellen.

3. Ladestation nach Anspruch 1, umfassend Messmittel (51), welche die Druckdifferenz (ΔP) zwischen dem Druck (P1) der Luft in einem Zwischenabschnitt der Leitung (41) und dem Druck (P2) der Luft außerhalb des Behälters (11) messen; und dritte Rechenmittel (52), die den Volumenstrom von Luft (Q), der durch den Zwischenabschnitt der Leitung (41) strömt, als eine Funktion bzw. in Abhängigkeit von der Differenz (ΔP) des gemessenen Drucks bestimmen.

4. Ladestation nach Anspruch 3, wobei die dritten Rechenmittel (52) den Volumenstrom von Luft (Q) durch die folgende Gleichung berechnen:

$$Q = A \cdot K \sum_i \Delta P_i$$

wobei A einen Querschnitt des Zwischensegments der Leitung (41) darstellt; ΔPi die Druckunterschiede darstellt, die an vorbestimmten folgenden Zeitpunkten gemessen werden, während K eine Konstante ist.

5. Ladestation nach einem der vorhergehenden Ansprüche, wobei der Behälter (11) mit zwei inneren Kammern (23) (24) versehen ist, die ein variables Volumen aufweisen, zueinander komplementär sind und durch ein mobiles Trennelement (25) geteilt bzw. getrennt sind; wobei eine erste Kammer (23) mit variablem Volumen angepasst ist, das Öl zu entfalten, und mit einer Ausstoßöffnung (22) des bzw. für das Öl versehen ist, die mit dem Ladekreis (9) verbindbar ist; eine zweite Kammer (24) mit variablem Volumen angepasst ist, Luft zu enthalten, und mit der äußeren Umgebung durch die Öffnung (40) und die Leitung (41) kommuniziert bzw. in Verbindung ist.

6. Ladestation nach Anspruch 5, wobei das mobile Trennelement (25) der ersten und zweiten Kammer (23, 24) mit variablem Volumen einen Beutel umfasst, der konfiguriert ist, sich innerhalb des Behälters (11) unter der Aktion bzw. Wirkung des Drucks (P3) in der zweiten Kammer (24) zu verformen, so dass die Volumenvariation (ΔV), die in der zweiten Kammer (24) erhalten wird bzw. entfalten ist, zur gleichen Zeit eine gleiche Volumenvariation mit entgegengesetztem Zeichnen in der ersten Kammer (23) bestimmt.

**7.** Ladestation nach Anspruch 6, wobei der Behälter (11) umfasst: einen ersten steifen bzw. starren, tassen- bzw. schalenförmigen Körper (27), der intern die erste, Öl enthaltende Kammer (23) begrenzt, und einen zweiten steifen bzw. starren, tassen- bzw. schalenförmigen Körper (28), der mit dem ersten steifen tassenförmigen Körper (27) gekoppelt ist, um eine geschlossene Hülle zu bilden, und darin die zweite, Luft enthaltende Kammer (24) zu begrenzen; wobei der verformbare Beutel auf stabile Weise mit den Innenwänden des ersten (27) und/oder des zweiten (28) tassenförmigen Körpers verbunden ist, um die erste Kammer (23) von der zweiten Kammer (24) zu unterteilen bzw. zu teilen; wobei die Öffnung (40) an bzw. auf dem zweiten steifen Körper (28) erhalten wird bzw. enthalten ist.

**8.** Ladestation nach einem der Ansprüche 3 bis 7, wobei die Messmittel (51) zumindest einen Druckgeber bzw. -wandler bzw. -sensor umfassen, der an der Leitung (41) zum Messen des Drucks (P1) der Luft innerhalb des Zwischenabschnitts der Leitung (41) angeordnet ist.

**9.** Ladestation nach einem der vorhergehenden Ansprüche, wobei die zweiten Rechenmittel (54) konfiguriert sind, die Menge/das Gewicht von Öl, das aus dem Behälter (11) ausgestoßen wird, durch die folgende Gleichung zu berechnen:

$$QOL = ps * \Delta V$$

wobei ps das spezifische Gewicht des Öls ist; Δ V die Variation des Luftvolumens in dem Behälter ist.

**10.** Verfahren zum Bestimmen der Menge/des Gewichts eines Öls, das von bzw. aus einer Klimaanlagenladestation (1) eines Fahrzeugklimaanlagensystems (2) zugeführt wird; wobei die Kältemittelladestation (1) umfasst:

- zumindest ein Öl enthaltendes Reservoir bzw. Behälter (11), das bzw. der so geformt ist, dass es bzw. er eine Öffnung (40) aufweist, die mit einem Kanal bzw. einer Leitung (41) mit einer verringerten Sektion verbunden ist, die konfiguriert ist, den Innenraum des Reservoirs bzw. Behälters (11) mit dem Raum außerhalb des Reservoirs bzw. Behälters (11) zu verbinden; - einen Ladekreis (9), der konfiguriert ist, in das Klimaanlagensystem (2) Öl, das in dem Reservoir bzw. Behälter (11) enthalten ist, einem Befehl folgend zuzuführen;

wobei das Verfahren **dadurch gekennzeichnet ist, dass** es die Schritte umfasst:

- Bestimmen der Variation des Luftvolumens (Δ V) innerhalb des Reservoirs bzw. Behälters (11) als eine Funktion bzw. in Abhängigkeit von dem Volumenstrom von Luft (Q), der durch die Leitung bzw. den Kanal (41) strömt, während eines Ölzufuhrzeitintervalls (Δ T) in dem Klimaanlagensystem (2); und
- Berechnen der Menge/des Gewichts von Öl (QOL), das aus dem Reservoir bzw. Behälter (11) ausgestoßen und dem Klimaanlagensystem (2) zugeführt wird, als eine Funktion bzw. in Abhängigkeit von der Variation des Luftvolumens (A V).

**11.** Verfahren nach Anspruch 10, umfassend den Schritt des Berechnens des Volumenstroms von Luft (Q), der durch eine Sektion (A) des Zwischenabschnitts der Leitung (41) strömt, durch die folgende Gleichung:

$$Q = A \cdot K \sum_i \Delta P_i$$

wobei A die Sektion bzw. den Schnitt des Zwischensegments der Leitung darstellt; Δ Pi die Druckunterschiede darstellt, die an folgenden Zeitpunkten gemessen werden, und K eine Konstante ist.

**12.** Verfahren nach Anspruch 10, umfassend den Schritt des Messens des Volumenstroms von Luft (Q), der durch die Leitung (41) strömt.

**13.** Verfahren nach einem der Ansprüche 10 bit 12, umfassend den Schritt des Berechnens der Menge/des Gewichts von Öl, das aus dem Behälter (11) ausgestoßen wird, durch die folgende Gleichung:

$$QOL = ps * \Delta V$$

wobei ps das spezifische Gewicht des Öls ist; Δ V die Variation des Luftvolumens in dem Behälter ist.

## Revendications

**1.** Station de charge de climatiseur (1) configurée de manière à charger un fluide réfrigérant et/ou une huile dans un système de climatisation de véhicule (2) ;

ladite station comprenant :

    - au moins un réservoir contenant de l'huile (11) qui est façonné de manière à avoir un orifice (40) raccordé à un conduit (41) présentant une section réduite et configuré pour raccorder l'espace intérieur dudit réservoir (11) à l'espace à l'extérieur du réservoir (11) ;
    - un circuit de charge (9) configuré de manière à fournir une quantité d'huile contenue dans ledit réservoir (11) audit système de climatisation (2) suite à une commande ;

ladite station (1) étant **caractérisée en ce qu'**elle comprend un système électronique de mesure (18) (60) comprenant :

    - un premier moyen de calcul (53) déterminant la variation du volume d'air ($\Delta V$) dans ledit réservoir (11) en fonction du débit volumétrique d'air (Q) circulant à travers ledit conduit (41), pendant un intervalle de temps d'approvisionnement en huile ($\Delta T$) dans ledit système de climatisation (2) ; et
    - un deuxième moyen de calcul (54) configuré de manière à calculer la quantité/le poids de l'huile (QOL) éjectée dudit réservoir (11) et fournie audit système de climatisation (2) en fonction de ladite variation du volume d'air ($\Delta V$).

2. Station de charge selon la revendication 1, comprenant un moyen de mesure (51) qui mesure le débit volumétrique d'air (Q) circulant à travers la section (A) d'une partie intermédiaire dudit conduit (41) et fournit le débit volumétrique d'air (Q) audit premier moyen de calcul (3).

3. Station de charge selon la revendication 1, comprenant un moyen de mesure (51) qui mesure la différence de pression ($\Delta P$) entre la pression (P1) de l'air dans une partie intermédiaire dudit conduit (41) et la pression (P2) de l'air à l'extérieur dudit réservoir (11) ; et un troisième moyen de mesure (52) qui détermine le débit volumétrique d'air (Q) circulant à travers ladite partie intermédiaire dudit conduit (41) en fonction de ladite différence ($\Delta P$) de pression mesurée.

4. Station de charge selon la revendication 3, dans laquelle ledit troisième moyen de calcul (52) calcule le débit volumétrique d'air (Q) par l'équation suivante :

$$Q = A \cdot K \sum_{i} \Delta P_i$$

dans laquelle A représente une coupe transversale dudit segment intermédiaire dudit conduit (41) ; $\Delta Pi$ représente les différences de pression mesurées à des moments ultérieurs prédéterminés, tandis que K est une constante.

5. Station de chargement selon l'une quelconque des revendications précédentes, dans laquelle ledit réservoir (11) est pourvu de deux chambres intérieures (23) (24) qui ont un volume variable, sont complémentaires l'une de l'autre et sont séparées par un élément de séparation mobile (25) ; une première chambre de volume variable (23) étant adaptée pour contenir ladite huile et étant pourvue d'une ouverture d'éjection (22) de ladite huile qui peut être raccordée audit circuit de charge (9) ; une seconde chambre de volume variable (24) étant adaptée pour contenir de l'air et communicant avec l'environnement extérieur par le biais dudit orifice (40) et dudit conduit (41).

6. Système de charge selon la revendication 5, dans lequel ledit élément de séparation mobile (25) desdites première et seconde chambres de volume variable (23, 24) comprend une poche, qui est configurée pour se déformer à l'intérieur du réservoir (11), sous l'action de la pression (P3) dans la seconde chambre (24), de sorte que la variation de volume ($\Delta V$) obtenue dans la seconde chambre (24) détermine en même temps une même variation de volume ayant un signe opposé dans la première chambre (23).

7. Station de charge selon la revendication 6, dans laquelle ledit réservoir (11) comprend : un premier corps rigide en forme de tasse (27) délimitant de manière interne ladite première chambre contenant de l'huile (23), et un second corps rigide en forme de tasse (28), qui est couplé audit premier corps rigide en forme de tasse (27) de manière à former une coque fermée et y délimiter à l'intérieur ladite seconde chambre contenant de l'air (24) ; ladite poche déformable étant raccordée de manière stable aux parois intérieures dudit premier (27) et/ou dudit second (28) corps en forme de tasse de manière à séparer ladite première chambre (23) de ladite seconde chambre (24) ; ledit orifice (40) étant obtenu sur ledit second corps rigide (28).

8. Station de charge selon l'une quelconque des revendications 3 à 7, dans laquelle ledit moyen de mesure (51) comprend au moins un transducteur de pression agencé sur ledit conduit (41) pour mesurer la pression (P1) de l'air à l'intérieur de ladite partie intermédiaire du conduit (41).

9. Station de charge selon l'une quelconque des revendications précédentes, dans laquelle ledit deuxième moyen de calcul (54) est configuré pour calculer la quantité/le poids de l'huile éjectée dudit réservoir (11) par l'équation suivante :

$$QOL = ps * \Delta V$$

dans laquelle ps est le poids spécifique de ladite huile ; $\Delta V$ est la variation du volume d'air dans le réservoir.

10. Procédé de détermination de la quantité/du poids d'une huile fournie par une station de charge de climatiseur (1) d'un système de climatisation de véhicule (2) ;
ladite station de charge de réfrigérant (1) comprenant :

au moins un réservoir contenant de l'huile (11) qui est façonné de manière à avoir un orifice (40) raccordé à un conduit (41) présentant une section réduite et configuré pour raccorder l'espace intérieur dudit réservoir (11) à l'espace à l'extérieur du réservoir (11) ;
un circuit de charge (9) configuré de manière à fournir dans ledit système de climatisation (2) l'huile contenue dans ledit réservoir (11) suite à une commande ;
ledit procédé étant **caractérisé en ce qu'**il comprend les étapes consistant à :

- déterminer la variation du volume d'air ($\Delta V$) à l'intérieur dudit réservoir (11) en fonction du débit volumétrique d'air (Q) circulant à travers ledit conduit (41) pendant un intervalle de temps d'approvisionnement en huile ($\Delta T$) dans ledit système de climatisation (2) ; et
- calculer la quantité/le poids de l'huile (QOL) éjectée dudit réservoir (11) et fournie audit système de climatisation (2) en fonction de ladite variation du volume d'air ($\Delta V$).

11. Procédé selon la revendication 10, comprenant l'étape consistant à calculer le débit volumétrique d'air (Q) circulant à travers une section (A) de ladite partie intermédiaire dudit conduit (41) par l'équation suivante :

$$Q = A \cdot K \sum_i \Delta P_i$$

dans laquelle A représente la section dudit segment intermédiaire dudit conduit ; $\Delta P_i$ représente les différences de pression mesurées à des moments ultérieurs et K est une constante.

12. Procédé selon la revendication 10, comprenant l'étape consistant à mesurer le débit volumétrique d'air (Q) circulant à travers ledit conduit (41).

13. Procédé selon l'une quelconque des revendications 10 à 12, comprenant l'étape consistant à calculer la quantité/le poids de l'huile éjectée dudit réservoir (11) par la formule suivante :

$$QOL = ps * \Delta V$$

dans laquelle ps est le poids spécifique de ladite huile ; $\Delta V$ est la variation du volume d'air.

Fig. 1

Fig. 2

Fig. 3

Fig. 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4441330 A
- US 44413301 A
- US 5433081 A